# EUROPÄISCHE PATENTSCHRIFT

(11) **EP 3 361 000 B1**
(45) Veröffentlichungstag und Bekanntmachung des Hinweises auf die Patenterteilung: **04.12.2019**
(21) Anmeldenummer: 18151785.5
(22) Anmeldetag: 16.01.2018
(51) Int. Cl.: D06F 58/24, A47L 15/48, A21B 1/00

(54) **VORRICHTUNG ZUR ENTFEUCHTUNG, ELEKTROGERÄT MIT EINER SOLCHEN VORRICHTUNG UND VERFAHREN ZUR ENTFEUCHTUNG**
DEVICE FOR DEHUMIDIFICATION, ELECTRICAL DEVICE WITH SUCH A DEVICE AND METHOD FOR DEHUMIDIFYING
DISPOSITIF DE DÉSHUMIDIFICATION, APPAREIL ÉLECTRIQUE COMPRENANT UN TEL DISPOSITIF ET PROCÉDÉ DE DÉSHUMIDIFICATION

(30) Priorität: 08.02.2017 DE 102017202007
(43) Veröffentlichungstag der Anmeldung: 15.08.2018
(73) Patentinhaber: E.G.O. Elektro-Gerätebau GmbH, 75038 Oberderdingen (DE)
(72) Erfinder: Ose, Lutz, 75447 Sternenfels (DE); Schaumann, Uwe, 75038 Oberderdingen (DE); Thimm, Wolfgang, 76137 Karlsruhe (DE)
(74) Vertreter: Patentanwälte Ruff, Wilhelm, Beier, Dauster & Partner mbB

(56) Entgegenhaltungen:
- EP-A2- 2 353 487
- DE-A1-102014 222 400
- SATISH K. NUNE ET AL: "Anomalous water expulsion from carbon-based rods at high humidity", NATURE NANOTECHNOLOGY, Bd. 11, Nr. 9, 13. Juni 2016 (2016-06-13), Seiten 791-797, XP055456684, GB ISSN: 1748-3387, DOI: 10.1038/nnano.2016.91

## Beschreibung

Die Erfindung betrifft eine Vorrichtung zur Entfeuchtung von Luft in einem Elektrogerät bzw. in einem Behandlungsraum eines Elektrogeräts, ein mit einer solchen Vorrichtung versehenes Elektrogerät sowie ein Verfahren zum Betrieb einer solchen Vorrichtung oder eines solchen Elektrogeräts zur Entfeuchtung.

Es ist beispielsweise aus der WO 2013/097975 A1 bekannt, an einer Waschmaschine eine Vorrichtung zur Entfeuchtung vorzusehen, die luftführend mit einer Trommel als Behandlungsraum der Waschmaschine verbunden ist. Die Vorrichtung weist dabei einen fest installierten Behälter auf, in dem Zeolith angeordnet ist. Dieses Zeolith nimmt allgemein reversibel Feuchtigkeit auf mit sehr guten Eigenschaften, wie es an sich aus dem weiteren Stand der Technik bekannt ist. Mittels eines Lüfters kann Luft aus der Trommel durch das Zeolith geführt werden, die dort dann entfeuchtet bzw. getrocknet wird. Eine Regeneration des mit Feuchtigkeit beladenen Zeoliths kann dann später erfolgen. Dabei wird bei der Feuchteaufnahme im Zeolith gleichzeitig Wärme in die Umgebung abgegeben, was für eine Aufheizung der Luft genutzt werden kann. Zur Regeneration kann unter Umständen noch zusätzlich ein Heizelement verwendet werden.

Aus der Zeitschrift "Nature Nanotechnology 11" aus 2016, S. 791 bis 797, ist der Artikel "Anomalous water expulsion from carbon-based rods at high humidity" von Satish K. Nune et al. bekannt, siehe doi:10.1038/nnano.2016.91. Darin wird beschrieben, dass Carbon-basiertes Material, insbesondere Fasern, die Eigenschaft aufweist, dass es Wasser bei schon bei einer niedrigen relativen Luftfeuchtigkeit aufnehmen und auch bei einer hohen relativen Feuchtigkeit von 50 % bis 80 % wieder abgeben kann. Dieser Vorgang ist jederzeit reversibel, wobei er durch eine Trocknung mittels Erwärmung unterstützt bzw. beschleunigt werden kann.

Aus der DE 10 2014 222 400 A1 ist es bekannt, bei einem Haushaltsgerät zum Trocknen von Wäsche, einem sogenannten Wäschetrockner, insbesondere einem Kondensationstrockner, eine Abscheideeinheit vorzusehen, die zumindest teilweise Fasern aufweist. Die Fasern müssen nichtmetallisch sein und können beispielsweise Chemiefasern, insbesondere Polymerfasern, oder Kohlenstofffasern sein. Die Abscheideeinheit mit den Fasern kann einem Kondensator vorgeschaltet oder nachgeschaltet sein.

### Aufgabe und Lösung

Der Erfindung liegt die Aufgabe zugrunde, eine eingangs genannte Vorrichtung, ein Elektrogerät sowie ein Verfahren zu jeweils deren Betrieb zu schaffen, mit denen Probleme des Standes der Technik gelöst werden können und es insbesondere möglich ist, eine Entfeuchtung von Luft in einem Elektrogerät schnell, energiesparend und praxistauglich durchführen zu können.

Gelöst wird diese Aufgabe durch eine Vorrichtung mit den Merkmalen des Anspruchs 1, durch ein Elektrogerät mit den Merkmalen des Anspruchs 10 sowie durch ein Verfahren mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für die Vorrichtung, nur für das Elektrogerät oder nur für das Verfahren beschrieben. Sie sollen jedoch unabhängig davon sowohl für die Vorrichtung, für ein damit versehenes Elektrogerät als auch für ein entsprechendes Verfahren unabhängig und selbständig voneinander gelten können. Der Wortlaut der Ansprüche wird durch ausdrückliche Bezugnahme zum Inhalt der Beschreibung gemacht.

Es ist vorgesehen, dass die Vorrichtung in einem Elektrogerät angeordnet ist, welches einen Behandlungsraum aufweist, der insbesondere ein Garraum ist bei einem Elektrogerät zum Garen bzw. einem Gargerät oder in eine Kammer ist bei einem Elektrogerät, das zur Behandlung von Wäsche oder Geschirr gedacht ist, insbesondere eine Waschmaschine oder ein Wäschetrockner. Die Vorrichtung ist mit dem Behandlungsraum des Elektrogeräts luftführend verbindbar bzw. verbunden. Dazu kann die Vorrichtung entweder direkt an den Behandlungsraum oder an eine Wandung davon angrenzen, alternativ kann sie mittels einer Luftführung nach Art eines Luftkanals odgl., ähnlich wie aus der vorgenannten WO 2013/097975 A1 bekannt, mit dem Behandlungsraum luftführend verbunden sein.

Die Vorrichtung weist als Material zur Feuchtigkeitsaufnahme bzw. zur Aufnahme von Wasser aus Wasserdampf Carbon-basierte Fasern bzw. Carbon-Fasern auf, die beispielsweise auch Carbon-Nanotubes aufweisen können. Sie können auch als Schicht ausgebildet sein, müssen also nicht zwingend über ihre gesamte Länge frei verlaufende Fasern sein.

Die Carbon-basierten Fasern sind als sogenannte Faser-Einheit oder an einer solchen Faser-Einheit ausgebildet. Dies bedeutet, dass sie an bzw. auf einem Träger angeordnet oder befestigt sind. Vorteilhaft sind sämtliche Fasern bzw. sämtliches Fasermaterial an dieser Faser-Einheit vorgesehen. Deren genaue Ausbildung wird nachfolgend noch näher erläutert, sie sollte jedoch eine relativ große Oberfläche aufweisen, um möglichst gut Feuchtigkeit aus der Luft aufnehmen zu können. An dieser relativ großen Oberfläche der Faser-Einheit mit den Carbon-basierten Fasern kann Luft entlangstreichen und ihre Feuchtigkeit abgeben. Die Oberfläche kann dabei einerseits im Wesentlichen geschlossen sein, alternativ kann sie Kanäle oder Durchbrechungen aufweisen, um eine bessere Durchströmung und somit eine insgesamt größere aktive Oberfläche zu erreichen.

Die Faser-Einheit ist angeordnet zwischen einerseits dem Behandlungsraum oder einer mit dem Behandlungsraum verbundenen Luftführung, und andererseits einer Entfeuchtungs-kammer, die vorteilhaft Teil der Vorrichtung ist und darin angeordnet ist, so dass die Carbon-basierten Fasern einerseits Feuchtigkeit aus der Luft des Behandlungsraums aufnehmen können und andererseits wieder abgeben können. Des Weiteren sind die Carbon-basierten Fasern nicht fest bzw. unbeweglich angeordnet, sondern bewegbar, so dass sie zu der oder in die Entfeuchtungskammer bewegt werden können, damit sie dort ihre aufgenommene Feuchtigkeit wieder abgeben können. Diese Abgabe kann erfolgen, also derart, dass die Feuchtigkeit als Wassertropfen abgegeben wird. Diese können insbesondere von den Carbon-basierten Fasern abtropfen. Diese Feuchtigkeit kann auf an sich übliche Art und Weise gesammelt werden und abgeführt werden, alternativ bei Bedarf wiederverwendet werden. Dabei kann im Rahmen der Erfindung ein spezielles Verhalten solcher Carbon-basierten Fasern genutzt werden. Diese können nämlich schon bei einer niedrigen relativen Luftfeuchtigkeit Wasser aufnehmen und auch bei einer hohen relativen Luftfeuchtigkeit von 50 % bis 80 % wieder abgeben, siehe oben. Dieser Vorgang ist jederzeit reversibel, wobei er durch eine Trocknung, insbesondere mittels Erwärmung, wie nachfolgend noch näher erläutert wird, unterstützt bzw. beschleunigt werden kann. So kann beispielsweise eine Feuchtigkeitsaufnahme selbst bei Raumtemperatur bis zu einer relativen Luftfeuchtigkeit von 50 % oder sogar 80 % noch ansteigen, also besser werden, je feuchter die Luft ist. Dieser Effekt kann genutzt werden. Dabei sammelt sich die Feuchtigkeit an der Oberfläche der Carbon-basierten Fasern, läuft dann daran herab und konzentriert sich somit an einem unteren Ende oder Endbereich, von wo aus das Wasser aufgrund der angesammelten Menge eben abtropfen kann. Von Vorteil ist dabei eben auch, dass die relative Luftfeuchtigkeit dort, wo die Faser-Einheit die Feuchtigkeit aufnehmen soll, also im oder am Behandlungsraum, durchaus geringer sein kann als dort, wo die Feuchtigkeit als Wasser wieder abgegeben werden soll. Dies ermöglicht im Ergebnis eben ein besonders gutes Entfeuchten der Luft des Behandlungsraums. Des Weiteren hat sich im Rahmen der Erfindung gezeigt, dass bei einer thermisch unterstützten Regeneration der Carbon-basierten Fasern geringere Temperaturen ausreichen als beispielsweise bei den eingangs genannten Zeolith-Materialien aus dem Stand der Technik.

Alternativ zu einer Abgabe der Feuchtigkeit der Carbon-basierten Fasern in der Entfeuchtungs-kammer in flüssiger Form bzw. als Wasser kann auch eine Abgabe durch Verdampfen von den Carbon-Fasern erfolgen. Hierfür werden aber voraussichtlich höhere Temperaturen benötigt als für eine vorgenannte Unterstützung der Regeneration der Carbon-Fasern durch Erwärmen.

In Ausgestaltung der Erfindung können in der Entfeuchtungskammer eben bereits vorgenannte Heizmittel vorgesehen sein, die eine Regeneration bzw. Trocknung der Carbon-basierten Fasern noch unterstützen können. So kann eine Rest-Feuchtigkeit entfernt werden, die evtl. tiefer in einem Verbund der Fasern enthalten ist. Die Heizmittel können sehr vielfältig ausgebildet sein, insbesondere ausgewählt aus einer Gruppe von Induktionsheizung, Strahlungsheizung, Dickschichtheizung und Heißluft-Heizung. Ebenso ist es möglich, die Carbon-basierten Fasern mittels eines Einsatzes von Mikrowellen zu trocknen. Auch eine mögliche Unterstützung der Heizleistung mittels Luftbewegung bzw. Durchlüftung wird als vorteilhaft angesehen zur Beschleunigung einer Aufheizung.

In Ausgestaltung der Erfindung können die Carbon-basierten Fasern gestreckt verlaufen an der Faser-Einheit. Besonders vorteilhaft sind sie dabei geradlinig, so dass die zuvor beschriebene Bildung von Wassertröpfchen durch herunterlaufendes Wasser begünstigt werden kann. In vorteilhafter Ausgestaltung der Erfindung verlaufen die Fasern dabei zumindest teilweise schräg oder mit einer vertikalen Richtungskomponente, wobei sie besonders vorteilhaft weitgehend oder vollständig vertikal verlaufen.

Grundsätzlich können die Carbon-basierten Fasern in beliebiger Form vorliegen, beispielsweise als eine Art Geflecht, Gewirke oder Gelege. Dann weist die Faser-Einheit also eine Art textiles Fasermaterial aus Carbon-basierten Fasern auf. Vor allem wenn ein solches textiles Material relativ lose hergestellt ist, weist es eine große Oberfläche und somit eine gute Fähigkeit zur Aufnahme von Feuchtigkeit aus Wasserdampf bzw. aus der Luft des Behandlungsraums auf.

In alternativer Ausgestaltung der Erfindung können die Carbon-Fasern frei verlaufen nach Art von Faserbündeln, insbesondere geradlinigen Faserbündeln. Hier ist es dann besonders gut möglich, diesen Faserbündeln bzw. den Carbon-basierten Fasern eine vertikale Verlaufsrichtung zu geben und so das Sammeln bzw. Abgeben von Feuchtigkeit durch Herabtropfen zu ermöglichen. Diese Carbon-basierten Fasern können dann als eine Art Vorhang odgl. hängend befestigt sein, wobei vorzugsweise ihre unteren Enden frei bleiben sollten zum verbesserten Abtropfen.

Bei der Erfindung ist die Faser-Einheit nicht nur zwischen dem Behandlungsraum oder einer entsprechenden Luftführung und der Entfeuchtungskammer angeordnet, sondern kann dazwischen bewegt werden. Sie kann entweder in sich bewegbar sein oder sozusagen hin- und her bewegbar bzw. rotierend oder umlaufend bewegbar sein. So kann sie Feuchtigkeit aus Luft im Behandlungsraum oder in einem Luftkanal als Luftführung aufnehmen. Dann können die einzelnen Fasern zur Entfeuchtungskammer bzw. in die Entfeuchtungskammer bewegt werden, wo sie auf vorbeschriebene Art und Weise die Feuchtigkeit wieder abgeben können. Als Bewegung wird eine kontinuierliche Bewegung wie eine Rotation oder ein Umlaufen bevorzugt, da dies technisch leichter zu realisieren ist und einen kontinuierlichen Betrieb bzw. eine kontinuierliche Entfeuchtung ermöglicht. Die Faser-Einheit kann beispielsweise trommelförmig oder walzenförmig ausgebildet sein, vorteilhaft mit den Carbon-basierten Fasern an einer Außenseite. Alternativ kann die Faser-Einheit ein umlaufendes Band sein, auch dieses kann die Carbon-Fasern aufweisen oder sogar zumindest teilweise oder weitgehend daraus gebildet sein. Auch hier ist es, gerade wegen Umlaufrollen odgl., vorteilhaft, wenn die Carbon-Fasern zumindest an der Außenseite vorgesehen sind. Dies verbessert auch eine Feuchtigkeitsaufnahme.

In vorteilhafter Ausgestaltung der Erfindung ist die Entfeuchtungskammer mit einem Wasserbehälter verbunden, hierfür kann evtl. eine Wasserleitung vorgesehen sein. Dabei ist vorteilhaft der Wasserbehälter unterhalb der Entfeuchtungskammer angeordnet für ein selbsttätiges Einleiten von Flüssigkeit. So kann beispielsweise mit einer vorgenannten Wasserleitung, die von einem unteren Ende der Entfeuchtungskammer abgeht, Flüssigkeit zu einem darunter angeordneten Wasserbehälter geleitet werden. Ein solcher Wasserbehälter kann auch entnehmbar in dem Gerät angeordnet sein, so dass er entnommen werden kann zum Ausleeren des angesammelten Wassers. Dies ist von einer Vielzahl von Geräten wie beispielsweise Kondensations-Wäschetrocknern bekannt.

Vorteilhaft liegen die Carbon-basierten Fasern an zumindest einem Ende offen, möglicherweise auch in einem größeren Mittelbereich. Insbesondere wenn sie weitgehend vertikal angeordnet sind und die Entfeuchtung hauptsächlich darüber ablaufen soll, dass sich Feuchtigkeit an den Fasern sammelt und dann an ihnen herunterläuft sowie als Wassertropfen ablöst, sollten die unteren Enden offen liegen bzw. freiliegen. Hierfür kann eine Länge von einigen Millimetern ausreichen, beispielsweise 2 mm bis 5 mm. Auch an einem oberen Endbereich können die Carbon-basierten Fasern offen bzw. freiliegen. Insgesamt sollten sie zu einem größeren oder sogar überwiegenden Teil frei liegen, bevorzugt mit mehr als 50 % oder sogar mehr als 80 % ihrer Länge.

Die Carbon-basierten Fasern werden in der Entfeuchtungskammer vorteilhaft im oberen Bereich angeordnet. So kann ein Herabtropfen von Wasser gut erfolgen. Sie sollten zumindest bis in eine obere Hälfte reichen. Bevorzugt weisen sie einen bestimmten Abstand zu einem unteren Boden der Entfeuchtungskammer auf, so dass sich hier Wasser sammeln kann.

In Ausgestaltung der Erfindung kann vorgesehen sein, dass die Entfeuchtungskammer gegenüber dem Behandlungsraum weitgehend abgedichtet wird. So kann verhindert werden, dass Luft mit höherer relativer Feuchtigkeit von der Entfeuchtungskammer wieder in den Behandlungsraum gelangt, möglicherweise direkt oder über eine zuvor beschriebene Luftführung. Dabei können Dichtungen vorgesehen sein, an denen die Faser-Einheit anliegt und an denen sie sich vorbeibewegt. Vor allem wenn eine Dichtung direkt an den Carbon-basierten Fasern anliegt, sollte sie ausreichend weich sein, um bei einer Relativbewegung aneinander keine Beschädigung der Fasern hervorzurufen. Es wird hier keine hermetische Dichtheit benötigt. Ebenso sollte die Dichtung nach Möglichkeit keine an den Fasern gesammelte Feuchtigkeit wieder derart abstreifen, dass sie im Behandlungsraum verbleibt.

Im Prinzip sieht die Erfindung also vor, dass Feuchtigkeit mittels der Carbon-basierten Fasern aus einem Behandlungsraum oder einer mit dem Behandlungsraum angeschlossenen Luftführung aufgenommen und in die Entfeuchtungskammer gebracht wird bzw. die Carbon-Fasern mit der gesammelten Feuchtigkeit entsprechend bewegt werden. In der Entfeuchtungskammer wird die Feuchtigkeit dann als Waser gesammelt und abgeführt oder gespeichert. Dann werden die entfeuchteten bzw. zumindest teilweise getrockneten Carbon-basierten Fasern wieder in den Behandlungsraum oder an die Luftführung gebracht, um dort erneut Feuchtigkeit aufzunehmen. In der Entfeuchtungskammer kann möglicherweise eine Erwärmung der Carbon-basierten Fasern vorgenommen werden, um sie schneller und/oder gründlicher zu entfeuchten bzw. zu trocknen.

Als mögliche Elektrogeräte können neben den vorgenannten Waschmaschinen und Wäschetrocknern sowie Geschirrspülmaschinen auch Gargeräte wie Backöfen oder Dampfgarer mit einer solchen Vorrichtung versehen sein. Ebenso kann sie in Klimageräten und Abzugshauben eingesetzt werden. Die besonders vorteilhaften Eigenschaften der Carbon-basierten Fasern können hier genutzt werden. Des Weiteren kann selbst bei deren zusätzlicher Erwärmung, was einen gewissen Energiebedarf bedeutet, eine notwendige Temperatur noch unter derjenigen gehalten werden, die beispielsweise im Stand der Technik für den Einsatz von Zeolith benötigt wird.

Eine solche Vorrichtung kann auch mit einem vorgeschalteten Wärmetauscher kombiniert werden. So kann in der Entfeuchtungskammer ein Raum mit erhöhter relativer Luftfeuchtigkeit geschaffen werden, die dann wiederum geregelt werden kann. Alternativ kann ein Elektrogerät einen Wärmetauscher aufweisen, der der Vorrichtung zur Entfeuchtung nachgeschaltet ist bzw. in den bereits entfeuchtete Luft strömt, bevor sie dann vorteilhaft wieder in das Elektrogerät strömt. Alternativ kann der Wärmetauscher der Vorrichtung zur Entfeuchtung vorgeschaltet sein.

Auch bei einem Geschirrspüler kann die Erfindung vorteilhaft eingesetzt werden, da dann Wartezeiten zum Öffnen der Tür reduziert werden können, da auch geringere Temperaturen für das Trocknen des Geschirrs möglich sind.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine stark schematisierte Darstellung eines Aufbaus einer Spülmaschine als erfindungsgemäßes Elektrogerät,
- Fig. 2 und 3: etwas detailliertere schematische Darstellungen eines Aufbaus einer erfindungsgemäßen Vorrichtung zur Entfeuchtung,
- Fig. 4: eine alternative Ausgestaltung einer erfindungsgemäßen Vorrichtung zur Entfeuchtung in einer weiteren erfindungsgemäßen Spülmaschine,
- Fig. 5: eine schematische Darstellung eines erfindungsgemäßen Kondensationstrockners mit Entfeuchtung und
- Fig. 6: ein Diagramm von zwei Verläufen der Wasseraufnahmefähigkeit über der relativen Luftfeuchtigkeit.

### Detaillierte Beschreibung der Ausführungsbeispiele

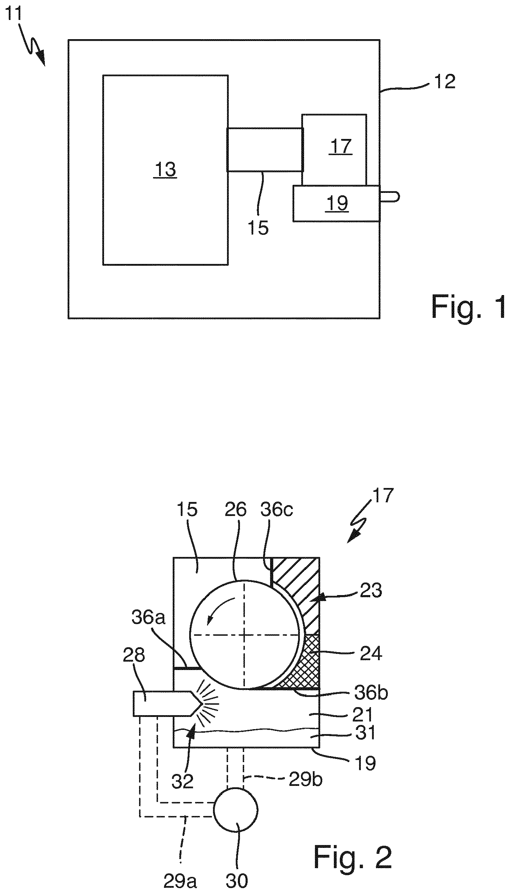

In der Fig. 1 ist eine Spülmaschine 11 als erfindungsgemäßes Elektrogerät sehr schematisch dargestellt, die auf an sich übliche Art und Weise ein Gehäuse 12 mit einer Spülkammer 13 darin aufweist. Die Spülkammer 13 ist rückseitig mittels eines Luftkanals 15 als Luftführung mit einer erfindungsgemäßen Vorrichtung 17 zur Entfeuchtung von Luft in der Spülkammer 13 verbunden. Unterhalb der Vorrichtung 17 ist ein Wasserbehälter 19 gezeigt, der aus der Spülmaschine 11 entnehmbar sein kann. Die ist aber kein zwingendes Merkmal.

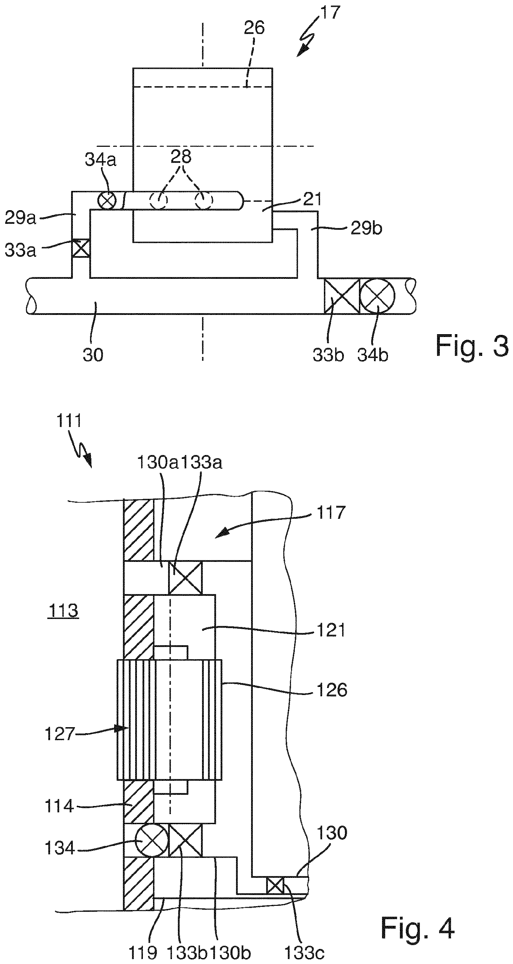

In den Fig. 2 und 3 ist eine erfindungsgemäße Vorrichtung 17 zur Entfeuchtung etwas detaillierter dargestellt, einmal im seitlichen Schnitt und dann von vorne. Die Vorrichtung 17 ist mit einem Luftkanal 15 verbunden bzw. an diesen angesetzt. Kernstück der Vorrichtung 17 ist eine Faser-Einheit 26 in Form einer rotierenden Trommel, in Fig. 2 entgegen dem Uhrzeigersinn. Die Faser-Einheit 26 ist, wie zuvor erläutert worden ist, an ihrer Außenseite mit Carbon-basierten Fasern versehen, beispielsweise in Form einer flächigen Ausgestaltung, vorzugsweise als Textil bzw. textiles Material. Es kann nach Art einer Matte oder eines Stoffs ausgebildet sein mit einer großen effektiven Oberfläche zur möglichst guten Aufnahme von Feuchtigkeit, wie eingangs erläutert worden ist.

Die Vorrichtung 17 weist eine Entfeuchtungskammer 21 auf, die an diese Faser-Einheit 26 unten bzw. einen ersten Teil derselben angrenzt. Nach rechts oben, im Durchlauf der Faser-Einheit 26 nachfolgend, ist eine Heizkammer 23 angeordnet als zweiter Teil zur Entfeuchtung. In der Heizkammer 23 ist ein Heizelement 24 schematisch dargestellt, das für eine vollständige Regeneration bzw. Entfeuchtung und somit Trocknung der Carbon-basierten Fasern bzw. der Faser-Einheit 26 sorgt. Das Heizelement 24 kann eines der eingangs genannten sein, vorteilhaft eine Strahlungsheizung, insbesondere mit Unterstützung durch Heißluft.

Der Luftkanal 15, die Entfeuchtungskammer 21 und die Heizkammer 23 sind gegeneinander abgedichtet durch Dichtungen 36a, 36b und 36c. Diese können beispielsweise relativ weiche oder flexible Gummidichtungen odgl. sein, die einen Luftübertritt zwischen den verschiedenen Bereichen bzw. Kammern an der Faser-Einheit 26 entlang zumindest weitgehend verhindern sollen.

In der Entfeuchtungskammer 21 bzw. deren erstem Teil ist links eine Düse 28 angeordnet, die zur Erreichung einer höheren Luftfeuchtigkeit in diesem Bereich dient. Durch das Einspritzen von Wasser in die Entfeuchtungskammer 21 wird erreicht, dass die Carbon-basierten Fasern der Faser-Einheit 26 ihre Feuchtigkeit noch besser abgeben, und diese kann dann nach unten tropfen als Wasser 31 in den angedeuteten Wasserbehälter 19.

Nach unten kann Wasser 31 aus dem Wasserbehälter 19 ablaufen mittels eines Rohrs 29b, das zu einer Leitung 30 führt. Von dort aus kann das Wasser mittels eines Ventils 33b und/oder einer Pumpe 34b abtransportiert werden. Alternativ kann Wasser mittels eines Ventils 33a und der Pumpe 34a zu den Düsen 28 geleitet werden und dann eben in die Entfeuchtungskammer 21 hineingespritzt bzw. hineinvernebelt werden. Dies soll die Entfeuchtung der Carbon-basierten Fasern verstärken.

Eine Drehgeschwindigkeit der Faser-Einheit 26 in Form der Trommel sollte nicht zu hoch sein. Es wird als wichtig und vorteilhaft angesehen, wenn die Verweilzeit der einzelnen Carbon-basierten Fasern in jedem der drei Bereiche mehrere Sekunden beträgt, so dass der jeweilige Vorgang der Feuchtigkeitsaufnahme und der Feuchtigkeitsabgabe erfolgreich ablaufen kann. Antriebe für die Faser-Einheit 26 sind jeweils nicht dargestellt, für den Fachmann aber leicht zu realisieren.

Das Heizelement 24 in der Heizkammer 23 als zweiter Teil der Entfeuchtungskammer muss keine besonders hohen Temperaturen erzeugen zur vollständigen Regeneration bzw. Trocknung der Faser-Einheit 26. Temperaturen von 100°C bis 400°C werden als ausreichend angesehen, unter Umständen reichen auch Temperaturen bis zu 200°C aus. Durch eine Luftunterstützung beim Beheizen, also sozusagen durch Heißluft, kann erreicht werden, dass auch in die Tiefe des textilen Materials aus Carbon-basierten Fasern hinein eine Trocknung erreicht wird.

In der Fig. 4 ist eine alternative Ausgestaltung für eine Spülmaschine 111 als erfindungsgemäßes Elektrogerät dargestellt mit einer weiteren erfindungsgemäßen Vorrichtung 117 zur Entfeuchtung. An eine Kammerwand 114 der Spülkammer 113, vorteilhaft eine rückwärtige Wand, ist die Vorrichtung 117 direkt angebaut. Durch eine entsprechende passgenaue Öffnung ragt eine trommelförmige, rotierende Faser-Einheit 126 zumindest teilweise in die Spülkammer 113. Hier können wiederum Dichtungen vorgesehen sein. An der Außenseite der Faser-Einheit 126 sind vertikal verlaufende Carbon-basierte Fasern 127 schematisch dargestellt. Sie können daran relativ lose befestigt sein, insbesondere mit freiliegenden mittleren Bereichen und unteren Endbereichen.

Hinter der Kammerwand 114 ist eine Entfeuchtungskammer 121 dargestellt, in der sich der wesentliche Teil der Faser-Einheit 126, insbesondere ihre strichpunktiert dargestellte vertikale Rotationsachse, befindet. Unterhalb der Faser-Einheit 126 ist ein Wasserbehälter 119 schematisch dargestellt. Aus diesem kann mittels einer Leitung 130 und eines Ventils 133c Wasser, das von der Faser-Einheit 126 abgegeben worden ist, abgeführt bzw. abgelassen werden.

Für eine weitere mögliche Wasserführung, insbesondere auch wieder zurück in die Spülkammer 113, sind Leitungen 130a und 130b samt Ventilen 133a und 133b dargestellt. Es ist auch eine Pumpe 134 in der unteren Leitung 130b angeordnet.

Bei der erfindungsgemäßen Spülmaschine 11 bzw. 111 dient die erfindungsgemäße Vorrichtung 17 bzw. 117 zur Entfeuchtung dazu, nach dem Abschluss des Spülens von Geschirr dessen Trocknung zu beschleunigen. Diese Trocknung erfolgt mit sehr heißer Luft, die in die Spülkammer 13 bzw. 113 hineingeblasen wird. Ein beschleunigtes Trocknen ist hier sehr wünschenswert. Ähnlich vorteilhaft kann die Erfindung aber auch bei den anderen eingangs genannten Geräten eingesetzt werden.

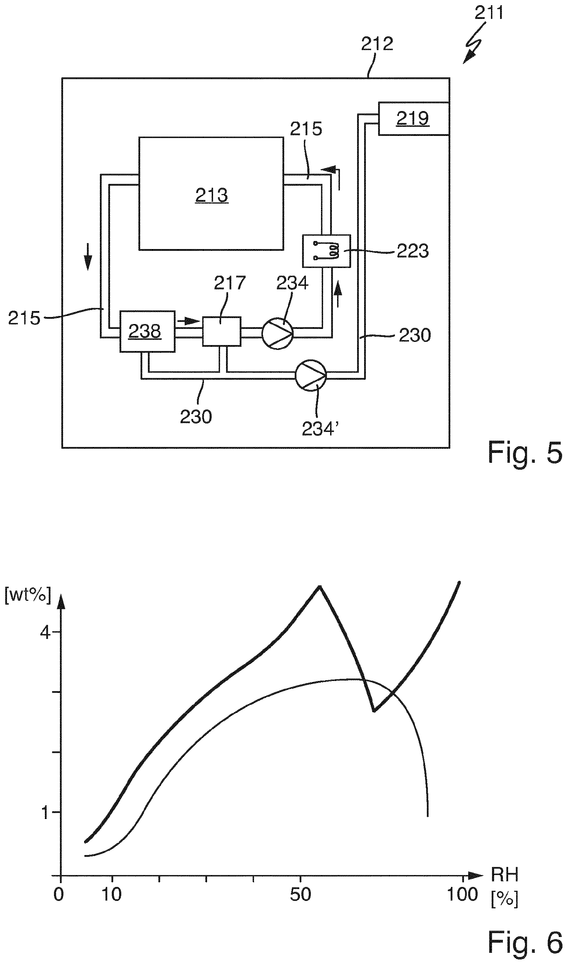

In der Fig. 5 ist ein Kondensationstrockner 211 als weiteres erfindungsgemäßes Elektrogerät dargestellt. In einem Gehäuse 212 des Kondensationstrockners 211 ist eine Trocknerkammer 213 vorgesehen, die mit einem sozusagen umlaufenden Luftkanal 215 verbunden ist. Feuchte Luft aus der Trocknerkammer 213 gelangt durch den Luftkanal 215 in einen Wärmetauscher 238 und dann in die Vorrichtung 217 zur Entfeuchtung. Danach wird die entfeuchtete Luft von einer ersten Pumpe 234 in eine Heizvorrichtung 223 gepumpt. Dann wird die entfeuchtete und erhitzte Luftwieder über den Luftkanal 215 zurück in die Trocknerkammer 213 gepumpt.

Ohne nähere Darstellung soll hier in der Vorrichtung 217 zur Entfeuchtung die Luft, ggf. nach Aufheizung, entfeuchtet werden wie zuvor beschrieben.

Unterhalb der Vorrichtung 217 und des Wärmetauschers 238 verläuft eine Leitung 230, in der Wasser gesammelt wird. Dieses Wasser wird mittels einer zweiten Pumpe 234' in einen Wasserbehälter 219 gepumpt. Von dort aus kann das Wasser abgesaugt oder abgeleitet werden, alternativ kann der Wasserbehälter 219 auch entnehmbar ausgebildet sein, um ihn entleeren zu können.

In der Fig. 6 sind zwei mögliche Verläufe der Fähigkeit zur Feuchtigkeitsaufnahme bzw. Wasseraufnahme über der relativen Luftfeuchtigkeit RH dargestellt. Die Temperatur beträgt etwa 25°C. Der dünn linierte Verlauf ist für Fasern aufgenommen worden, die 0.1 M FeCl₃ aufweisen. Hier ist zu erkennen, dass bis zu einer relativen Luftfeuchtigkeit von knapp 80% die Fähigkeit zur Feuchtigkeitsaufnahme sogar noch ansteigt.

Der dick linierte Verlauf gilt für Fasern mit 0.2 M FeCl₃. Hier besteht die Besonderheit, dass bis zu einer relativen Luftfeuchtigkeit RH von etwa 60% die Fähigkeit zur Aufnahme von Feuchtigkeit stark ansteigt und beispielsweise fast doppelt so groß wie bei einer relativen Luftfeuchtigkeit von 30%. Dann knickt der Verlauf sozusagen ein, um danach erneut stark anzusteigen.

## Patentansprüche

1. Vorrichtung (17, 117, 217) zur Entfeuchtung von Luft in einem Behandlungsraum (13, 113, 213) eines Elektrogeräts (11, 111, 211), insbesondere in einem Garraum eines Elektrogeräts zum Garen oder in einer Kammer eines Elektrogeräts zur Behandlung von Wäsche oder Geschirr, wobei:
- die Vorrichtung (17, 117, 217) mit dem Behandlungsraum (13, 113, 213) des Elektrogeräts (11, 111, 211) luftführend verbindbar ist,
- die Vorrichtung Carbon-basierte Fasern aufweist,
- die Carbon-basierten Fasern als Faser-Einheit (26, 126) ausgebildet sind,
- die Faser-Einheit (26, 126) angeordnet ist zwischen dem Behandlungsraum (13, 113, 213) oder einer mit dem Behandlungsraum verbundenen Luftführung (15, 130a, 215), damit die Carbon-basierten Fasern dort Feuchtigkeit aus der Luft des Behandlungsraums aufnehmen, und mindestens einer Entfeuchtungskammer (21, 121), damit die Carbon-basierten Fasern in der Entfeuchtungskammer die aufgenommene Feuchtigkeit abgeben,
**dadurch gekennzeichnet, dass**
die Faser-Einheit (26, 126) bewegbar ist zwischen einerseits dem Behandlungsraum oder einem Luftkanal (130a), der mit dem Behandlungsraum des Geräts verbunden ist, und andererseits der Entfeuchtungskammer (21, 121).

2. Vorrichtung nach Anspruch 1, **dadurch gekennzeichnet, dass** in der Entfeuchtungs-kammer Heizmittel für eine Regeneration bzw. Trocknung der Carbon-basierten Fasern vorgesehen sind, wobei vorzugsweise die Heizmittel in der Entfeuchtungskammer ausgewählt sind aus der Gruppe: Induktionsheizung, Strahlungsheizung, Dickschichtheizung, Heißluft-Heizung.

3. Vorrichtung nach Anspruch 1 oder 2, **dadurch gekennzeichnet, dass** die Carbon-basierten Fasern gestreckt verlaufend ausgebildet sind, vorzugsweise geradlinig.

4. Vorrichtung nach einem der vorhergehenden Ansprüche, **dadurch gekennzeichnet, dass** die Bewegung der Faser-Einheit (26, 126) eine Rotation ist.

5. Vorrichtung nach einem der vorhergehenden Ansprüche, **dadurch gekennzeichnet, dass** die Faser-Einheit (26, 126) trommelförmig oder walzenförmig oder als ein umlaufendes Band ausgebildet ist mit den Carbon-basierten Fasern an einer Außenseite.

6. Vorrichtung nach einem der vorhergehenden Ansprüche, **dadurch gekennzeichnet, dass** die Entfeuchtungskammer (21, 121) mit einem Wasserbehälter (19, 119, 219) verbunden ist, insbesondere über eine Wasserleitung (230), die vorzugsweise von einem unteren Ende der Entfeuchtungs-Kammer abgeht zu dem darunter angeordneten Wasserbehälter (219), wobei insbesondere der Wasserbehälter (219) entnehmbar in dem Gerät (211) angeordnet ist.

7. Vorrichtung nach einem der vorhergehenden Ansprüche, **dadurch gekennzeichnet, dass** die Carbon-basierten Fasern an zumindest einem Ende offen liegen bzw. frei liegen, insbesondere über eine Länge von mindestens 2 mm bis 5 mm offen liegen bzw. frei und bewegbar sind, wobei vorzugsweise die Carbon-basierten Fasern auch an einem anderen Ende offen liegen bzw. frei liegen.

8. Vorrichtung nach einem der vorhergehenden Ansprüche, **dadurch gekennzeichnet, dass** die Carbon-basierten Fasern in der Entfeuchtungskammer (21, 121) im oberen Bereich angeordnet sind, vorzugsweise in der oberen Hälfte, insbesondere mit Abstand zu einem unteren Boden der Entfeuchtungskammer.

9. Vorrichtung nach einem der Ansprüche 1 bis 7, **dadurch gekennzeichnet, dass** die Entfeuchtungskammer (21, 121) weitgehend abgedichtet ist gegenüber dem Behandlungsraum (13, 113, 213), insbesondere durch Dichtungen, an denen die Faser-Einheit (26, 126) anliegt oder an denen sie sich vorbei bewegt.

10. Elektrogerät (11, 111, 211), **dadurch gekennzeichnet, dass** es eine Vorrichtung (17, 117, 217) nach einem der vorhergehenden Ansprüche aufweist.

11. Elektrogerät nach Anspruche 10, **dadurch gekennzeichnet, dass** zusätzlich ein Wärmetauscher (238) vorgesehen ist, wobei vorzugsweise der Wärmetauscher der Vorrichtung (17, 117, 217) zur Entfeuchtung vorgeschaltet oder nachgeschaltet ist.

12. Verfahren zum Betrieb einer Vorrichtung (17, 117, 217) nach einem der Ansprüche 1 bis 9 oder zum Betrieb eines Elektrogeräts (11, 111, 211) nach Anspruch 10 oder 11 zur Entfeuchtung von Luft in dem Elektrogerät, mit den Schritten:
- Bewegen der Faser-Einheit (26, 126) mit den Carbon-basierten Fasern, entweder in den Behandlungsraum (13, 113, 213) des Elektrogeräts (11, 111, 211) oder an die Luftführung (15, 130a, 215), die mit dem Behandlungsraum des Geräts luftführend verbunden ist, wobei dabei die Carbon-basierten Fasern Feuchtigkeit aus der Luft des Behandlungsraums aufnehmen,
- anschließendes Bewegen der Faser-Einheit (26, 126) derart, dass die Carbon-basierten Fasern zumindest teilweise in die Entfeuchtungskammer (21, 121) gebracht werden,
- die Carbon-basierten Fasern geben die aufgenommene Feuchtigkeit ab,
- Sammeln der von den Carbon-basierten Fasern abgegebene Feuchtigkeit,
- erneutes Bewegen der Faser-Einheit (26, 126) mit den Carbon-basierten Fasern derart, dass sie mit dem Behandlungsraum (13, 113, 213) des Elektrogeräts luftführend verbunden ist zur erneuten Aufnahme von Feuchtigkeit.

13. Verfahren nach Anspruch 12, **dadurch gekennzeichnet, dass** die Carbon-basierten Fasern bzw. die Faser-Einheit (26, 126) gedreht wird bei ihrer Bewegung der Carbon-basierten Fasern zwischen dem Behandlungsraum (13, 113, 213) und der Entfeuchtungskammer (21, 121).

14. Verfahren nach Anspruch 12 oder 13, **dadurch gekennzeichnet, dass** die Carbon-basierten Fasern zur Abgabe der Feuchtigkeit erwärmt werden bzw. mit erwärmter Luft beaufschlagt werden.

15. Verfahren nach Anspruch 12 oder 13, **dadurch gekennzeichnet, dass** die Carbon-basierten Fasern die aufgenommene Feuchtigkeit in flüssiger Form abgeben, wobei insbesondere dazu die Carbon-basierten Fasern im Wesentlichen vertikal verlaufen in der Entfeuchtungskammer (21, 121), damit sich am unteren Ende der Carbon-basierten Fasern die Feuchtigkeit in Form von Wassertropfen sammelt und nach unten abtropft, damit das Wasser in einen Wasserbehälter (19, 119, 219) gemäß Anspruch 6 fließt.

## Claims

1. Device (17, 117, 217) for the dehumidification of air in a processing space (13, 113, 213) of an electric appliance (11, 111, 211), in particular in a cooking space of an electric appliance for cooking or in a chamber of an electric appliance for processing washing or dishes, wherein:
space (13, 113, 213) of the electric appliance (11, 111, 211),
- the device comprises carbon-based fibres,
- the carbon-based fibres are designed as a fibre unit (26, 126),
- the fibre unit (26, 126) is arranged between the processing space (13, 113, 213) or an air duct (15, 130a, 215) connected to the processing space for ensuring that the carbon-based fibres absorb moisture from the air of the processing space there, and at least one dehumidification chamber (21, 121) for ensuring that the carbon-based fibres release the absorbed moisture in the dehumidification chamber,
**characterized in that**
the fibre unit (26, 126) is movable between the processing space or an air channel (130a) connected to the processing space of the appliance, on the one hand, and the dehumidification chamber (21, 121), on the other hand.

2. Device according to Claim 1, **characterized in that** heating means for regeneration or drying of the carbon-based fibres are provided in the dehumidification chamber, wherein the heating means in the dehumidification chamber are preferably selected from the following group: induction heaters, radiant heaters, thick film heaters, hot air heaters.

3. Device according to Claim 1 or 2, **characterized in that** the carbon-based fibres are designed to extend in elongate fashion, preferably rectilinearly.

4. Device according to one of the preceding Claims, **characterized in that** the movement of the fibre unit (26, 126) is a rotation.

5. Device according to one of the preceding Claims, **characterized in that** the fibre unit (26, 126) is of drum-shaped or roll-shaped design or is designed as a circulating belt, with the carbon-based fibres on an outer side.

6. Device according to one of the preceding Claims, **characterized in that** the dehumidification chamber (21, 121) is connected to a water tank (19, 119, 219), in particular by a water line (230), which preferably proceeds from a lower end of the dehumidification chamber to the water tank (219) arranged thereunder, wherein, in particular, the water tank (219) is arranged removably in the appliance (211).

7. Device according to one of the preceding Claims, **characterized in that** the carbon-based fibres are uncovered or exposed at least at one end, in particular are uncovered or exposed and movable over a length of at least 2 mm to 5 mm, wherein the carbon-based fibres are also preferably uncovered or exposed at another end.

8. Device according to one of the preceding Claims, **characterized in that** the carbon-based fibres in the dehumidification chamber (21, 121) are arranged in the upper region, preferably in the upper half, in particular at a distance from a lower base of the dehumidification chamber.

9. Device according to any of the Claims 1 to 7, **characterized in that** the dehumidification chamber (21, 121) is largely sealed relative to the processing space (13, 113, 213), in particular by seals against which the fibre unit (26, 126) rests or past which it moves.

10. Electric appliance (11, 111, 211), **characterized in that** it has a device (17, 117, 217) according to one of the preceding Claims.

11. Electric appliance according to Claim 10, **characterized in that** a heat exchanger (238) is additionally provided, wherein the heat exchanger is preferably arranged upstream or downstream of the device (17, 117, 217) for dehumidification.

12. Method for operating a device (17, 117, 217) according to one of Claims 1 to 9 or for operating an electric appliance (11, 111, 211) according to Claim 10 or 11 for the dehumidification of air in the electric appliance, comprising the following steps:
- moving the fibre unit (26, 126) with the carbon-based fibres, either into the processing space (13, 113, 213) of the electric appliance (11, 111, 211) or to an air duct (15, 130a, 215), which is connected in an air-transmitting manner to the processing space of the appliance, wherein the carbon-based fibres absorb moisture from the air of the processing space during this process,
- subsequently moving the fibre unit (26, 126) in such a way that the carbon-based fibres are moved at least partially into the dehumidification chamber (21, 121),
- the carbon-based fibres release the absorbed moisture,
- collecting the moisture released by the carbon-based fibres,
- moving the fibre unit (26, 126) with the carbon-based fibres once again in such a way that it is connected in an air-transmitting manner to the processing space (13, 113, 213) of the electric appliance for renewed absorption of moisture.

13. Method according to Claim 12, **characterized in that** the carbon-based fibres or the fibre unit (26, 126) is rotated during its movement of the carbon-based fibres between the processing space (13, 113, 213) and the dehumidification chamber (21, 121).

14. Method according to Claim 12 or 13, **characterized in that** the carbon-based fibres are heated or supplied with heated air to release the moisture.

15. Method according to Claim 12 or 13, **characterized in that** the carbon-based fibres release the absorbed moisture in liquid form, wherein for this purpose, in particular, the carbon-based fibres extend substantially vertically in the dehumidification chamber (21, 121) so that the moisture collects in the form of water droplets at the lower end of the carbon-based fibres and drips downwards so that the water flows into a water tank (19, 119, 219) according to Claim 6.

## Revendications

1. Dispositif (17, 117, 217) de déshumidification de l'air dans un espace de traitement (13, 113, 213) d'un appareil électrique (11, 111, 211), en particulier dans un espace de cuisson d'un appareil électrique pour cuisiner ou dans une chambre d'un appareil électrique pour le traitement de linge ou de vaisselle, dans lequel:
- le dispositif (17, 117, 217) peut être connecté à l'espace de traitement (13, 113, 213) de l'appareil électrique (11, 111, 211) en conduisant l'air,
- le dispositif comprend des fibres à base de carbone,
- les fibres à base de carbone sont configurées sous forme d'unité de fibres (26, 126),
- l'unité de fibres (26, 126) est arrangée entre l'espace de traitement (13, 113, 213) ou un conduit d'air (15, 130a, 215) relié à l'espace de traitement, afin que les fibres à base de carbone absorbent là-dedans l'humidité de l'air de l'espace de traitement, et au moins une chambre de déshumidification (21, 121), afin que les fibres à base de carbone relâchent l'humidité absorbée dans la chambre de déshumidification,
**caractérisé en ce que**
l'unité de fibres (26, 126) est mobile entre, d'une part, l'espace de traitement ou un canal d'air (130a), qui est relié à l'espace de traitement de l'appareil, et, d'autre part, la chambre de déshumidification (21, 121).

2. Dispositif selon la revendication 1, **caractérisé en ce que** des moyens de chauffage sont prévus dans la chambre de déshumidification pour une régénération ou un séchage des fibres à base de carbone, dans lequel de préférence les moyens de chauffage dans la chambre de déshumidification sont choisis parmi le groupe: chauffage par induction, chauffage à rayonnement, chauffage à couche épaisse, chauffage à air chaud.

3. Dispositif selon la revendication 1 ou 2, **caractérisé en ce que** les fibres à base de carbone s'étendent sous forme allongée, de préférence sous forme rectiligne.

4. Dispositif selon l'une quelconque des revendications précédentes, **caractérisé en ce que** le déplacement de l'unité de fibres (26, 126) est une rotation.

5. Dispositif selon l'une quelconque des revendications précédentes, **caractérisé en ce que** l'unité de fibres (26, 126) est configurée en forme de tambour ou en forme de cylindre ou sous forme de bande circulant avec les fibres à base de carbone sur un côté extérieur.

6. Dispositif selon l'une quelconque des revendications précédentes, **caractérisé en ce que** la chambre de déshumidification (21, 121) est reliée à un réservoir d'eau (19, 119, 219), en particulier par une ligne d'eau (230), de préférence partant d'une extrémité inférieure de la chambre de déshumidification vers le réservoir d'eau (219) disposée en-dessous, dans lequel en particulier le réservoir d'eau (219) est disposé dans l'appareil (211) de façon détachable.

7. Dispositif selon l'une quelconque des revendications précédentes, **caractérisé en ce que** les fibres à base de carbone se présentent découvertes ou exposées au moins sur une extrémité, en particulier se présentent découvertes ou exposées et mobiles le long d'une longueur d'au moins 2 mm à 5 mm, dans lequel de préférence les fibres à base de carbone se présentent découvertes ou exposées aussi sur une autre extrémité.

8. Dispositif selon l'une quelconque des revendications précédentes, **caractérisé en ce que** les fibres à base de carbone sont disposées dans la chambre de déshumidification (21, 121) dans une partie supérieure, de préférence dans la moitié supérieure, en particulier à une distance à un fond inférieur de la chambre de déshumidification.

9. Dispositif selon l'une quelconque des revendications 1 à 7, **caractérisé en ce que** la chambre de déshumidification (21, 121) est largement scellée par rapport à l'espace de traitement (13, 113, 213), en particulier par des joints, sur lesquels l'unité de fibres (26, 126) fait appui ou le long desquels elle passe.

10. Appareil électrique (11, 111, 211), **caractérisé en ce qu'**il comporte un dispositif (17, 117, 217) selon l'une quelconque des revendications précédentes.

11. Appareil électrique selon la revendication 10, **caractérisé en ce qu'**un échangeur thermique (238) supplémentaire est prévu, dans lequel de préférence l'échangeur thermique est disposé en amont ou en aval du dispositif de déshumidification (17, 117, 217).

12. Procédé pour l'opération d'un dispositif (17, 117, 217) selon l'une quelconque des revendications 1 à 9 ou pour l'opération d'un appareil électrique (11, 111, 211) selon la revendication 10 ou 11 pour la déshumidification de l'air dans l'appareil électrique, comprenant les étapes:
- déplacer l'unité de fibres (26, 126) avec les fibres à base de carbone soit dans l'espace de traitement (13, 113, 213) de l'appareil électrique (11, 111, 211) soit au conduit d'air (15, 130a, 215) qui est relié à l'espace de traitement de l'appareil en conduisant l'air, ce faisant les fibres à base de carbone absorbant l'humidité de l'air de l'espace de traitement,
- ensuite déplacer l'unité de fibres (26, 126) de telle manière que les fibres à base de carbone sont transférées au moins partiellement dans la chambre de déshumidification (21, 121),
- les fibres à base de carbone relâchent l'humidité absorbée,
- accumuler l'humidité relâchée par les fibres à base de carbone,
- à nouveau déplacer l'unité de fibres (26, 126) avec les fibres à base de carbone de telle manière qu'elle soit reliée à l'espace de traitement (13, 113, 213) de l'appareil électrique en conduisant l'air pour une nouvelle absorption d'humidité.

13. Procédé selon la revendication 12, **caractérisé en ce que** les fibres à base de carbone ou l'unité de fibres (26, 126) est tourné lors de son déplacement des fibres à base de carbone entre l'espace de traitement (13, 113, 213) et la chambre de déshumidification (21, 121).

14. Procédé selon la revendication 12 ou 13, **caractérisé en ce que** les fibres à base de carbone sont chauffées ou bien alimentées d'air chauffé pour le relâchement de l'humidité.

15. Procédé selon la revendication 12 ou 13, **caractérisé en ce que** les fibres à base de carbone relâchent l'humidité absorbée sous forme liquide, dans lequel en particulier à cet effet les fibres à base de carbone s'étendent dans la chambre de déshumidification (21, 121) essentiellement en direction verticale, afin que l'humidité s'accumule sous forme de gouttes d'eau sur l'extrémité inférieure des fibres à base de carbone et s'égoutte vers le bas, afin que l'eau coule dans un réservoir d'eau (19, 119, 219) selon la revendication 6.
